# FASCICULE DE BREVET EUROPEEN

(11) **EP 4 536 512 B1**
(45) Date de publication et mention de la délivrance du brevet: **24.06.2026**
(21) Numéro de dépôt: 23727879.1
(22) Date de dépôt: 09.05.2023
(51) Int. Cl.: B60R 5/04, B60R 13/01

(54) **SUPPORT LATÉRAL DE PANNEAU DE PLANCHER DE COFFRE**
SEITLICHE HALTERUNG FÜR DIE BODENPLATTE DES KOFFERRAUMS
SIDE SUPPORT FOR BOOT FLOOR PANEL

(30) Priorité: 09.06.2022 FR 2205522
(43) Date de publication de la demande: 16.04.2025
(73) Titulaire: Stellantis Auto SAS, 78300 Poissy (FR)
(72) Inventeur: RIVIERRE, Laurent, 75015 PARIS (FR); AIT SAID, El Mehdi, CASABLANCA, 20300 (MA)
(74) Mandataire: BCIP
(86) Numéro de dépôt international: PCT/FR2023/000090
(87) Numéro de publication internationale: WO 2023/237824

(56) Documents cités:
- WO-A1-2014/198721
- WO-A1-2019/029718
- WO-A1-2021/259531
- FR-A1- 3 106 542

## Description

Le domaine technique concerne les supports de panneau de plancher, les coffres comprenant de tels supports ainsi que les véhicules équipés de tels coffres.

Les véhicules automobiles comportent généralement un coffre délimité en partie inférieure par un plancher, latéralement par deux garnitures latérales de coffre, à l'avant par une cloison transversale de séparation avec l'habitacle - généralement réalisée par l'arrière des sièges - et à l'arrière par un panneau de coffre ou un hayon.

La diversité des objets à transporter et à ranger dans un coffre de véhicule automobile, ainsi que les différents usages de ces objets, amènent les constructeurs à proposer des solutions de rangement ou de séparation du volume du coffre en plusieurs compartiments. A cet effet, on connaît des véhicules qui sont équipés d'un faux plancher séparant le coffre en deux volumes distincts, un volume situé au-dessous du faux plancher permettant de mettre des objets de valeur ou des objets que l'on ne souhaite pas mettre en contact avec d'autres, et un volume situé au-dessus ce faux plancher. Les systèmes utilisés jusqu'à présent permettant cette modularité du coffre peuvent être placés en deux catégories, une première catégorie comprenant des faux planchers amovibles glissés dans des rainures ménagées sur les parois latérales du coffre et une seconde catégorie comprenant des faux planchers non amovibles qui sont déplaçables par translation ou par pivotement entre différentes positions.

Dans le cas d'un faux plancher amovible, la manipulation de ce faux plancher n'est pas aisée et lors de sa remise en place, il nécessite l'usage des deux mains en l'absence de dispositif de guidage. La manipulation est encore moins aisée lorsque le faux plancher peut être positionné dans plusieurs positions distinctes. Par ailleurs, les clients des constructeurs d'automobiles sont très sensibles aux équipements des véhicules ainsi qu'à leurs finitions, ce qui comprend entre autres l'ajustement des assemblages des différents éléments des véhicules. Dans ce contexte, la facilité de manipulation, d'une part, et les ajustements d'un faux plancher avec autres éléments du coffre, d'autre part, sont essentiels pour conférer une impression de finition satisfaisante à l'utilisateur.

Le document WO 2014/198721 décrit un dispositif de support d'un panneau de coffre de véhicule automobile selon le préambule de la revendication 1, comportant un montant avant et un montant arrière, le montant arrière comportant des moyens de guidage en translation du panneau de coffre.

Le document WO 2021/259531 décrit un système pour fixer un plancher de chargement dans un véhicule automobile, comprenant un support de plancher de chargement et un plancher de chargement comportant une encoche ménagée sur un bord latéral.

Ainsi, il existe un besoin d'une solution permettant de faciliter la manipulation d'un faux plancher tout en offrant un ajustement satisfaisant de ce dernier avec le reste du coffre.

La présente invention a pour objet de pallier les problèmes exposés précédemment. Dans ce contexte technique, un but de la présente invention est de fournir un support latéral d'un panneau de plancher comportant des moyens de guidage pour faciliter le déplacement du panneau de plancher entre deux positions.

A cet effet, la présente invention se rapporte à un support latéral d'un panneau de plancher d'un coffre automobile selon la revendication 1, conçu pour s'étendre le long d'une garniture latérale du coffre, le support latéral étant conçu pour permettre de supporter, lorsque le support est installé le long de la garniture, le panneau de plancher dans au moins deux positions distinctes dont une position haute, le panneau de plancher étant du type comportant une encoche ménagée sur un bord latéral du panneau, le support comportant des moyens de guidage faisant saillie du support et conçus pour guider le déplacement du panneau de plancher entre deux positions par glissement d'un pourtour de l'encoche sur un plan de glissement des moyens de guidage, les moyens de guidage s'étendant, d'une part, depuis une base jusqu'à un rebord supérieur conformé pour prolonger le panneau de plancher, lorsque ce dernier est supporté dans la position haute, et s'étendant, d'autre part, entre le plan de glissement et un bord opposé, le bord opposé présentant une forme concave entre la base et le rebord supérieur.

L'invention concerne également un coffre de véhicule automobile selon la revendication 5, comprenant au moins un support latéral selon l'invention, chacun monté sur une garniture latérale du coffre et un panneau de plancher présentant au moins une encoche ménagée sur un bord latéral du panneau, chaque encoche étant dimensionnée et positionnée pour coopérer par glissement d'un pourtour de l'encoche avec un plan de glissement des moyens de guidage, lorsque le panneau est déplacé entre deux positions, le rebord supérieur prolongeant le panneau de plancher dans l'espace délimité par le pourtour de l'encoche lorsque le panneau est supporté dans la position haute.

L'invention concerne enfin un véhicule selon la revendication 7, comportant au moins un coffre selon l'invention.

Ainsi, le support latéral selon l'invention permet de constituer un coffre selon l'invention comprenant un panneau de plancher positionnable dans aux moins deux positions distinctes. La présence de moyens de guidage permet au support latéral selon l'invention de faciliter le déplacement, tandis que le rebord supérieur offre, lorsque le panneau de plancher est en position haute, un ajustement satisfaisant en prolongeant le panneau de plancher dans l'espace délimité par le pourtour de l'encoche, la forme concave du bord opposé permettant le déplacement du panneau de plancher autour de la position haute.

Selon un mode de réalisation du support selon l'invention, le support s'étend depuis une extrémité avant, conçue pour être disposée dans le coffre à proximité de sièges passagers, et une extrémité arrière, conçue pour être disposée dans le coffre à proximité d'un panneau arrière du coffre, le plan de glissement étant ménagé entre l'extrémité avant et le bord opposé.

Avantageusement, l'extrémité avant comporte une pluralité de surfaces d'appui conçues pour permettre de supporter le panneau de plancher, chaque surface d'appui correspondant à une position distincte du panneau de plancher dans le coffre.

Selon une possibilité, le plan de glissement prolonge le rebord supérieur pour former une surface de glissement continue.

Selon une possibilité du coffre selon l'invention, le rebord supérieur occupe au moins 50% de l'espace délimité par le pourtour d'une encoche, de préférence au moins 80%.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective d'un coffre selon l'invention montrant un panneau de plancher supporté par deux supports latéraux selon l'invention ;
[Fig. 2] la figure 2, représente une vue schématique d'un support latéral selon l'invention supportant le panneau de plancher en position haute ;
[Fig. 3] la figure 3, représente une vue schématique du support latéral de la figure 2 avec le panneau de plancher en cours de déplacement de la position haute vers une position basse ;
[Fig. 4] la figure 4, représente une vue schématique du support latéral de la figure 2 supportant le panneau de plancher en position basse ;
[Fig. 5] la figure 5, représente une vue depuis le coffre du support latéral de la figure 2 lorsque le panneau de plancher est en position haute.

Dans ces figures, les mêmes références sont utilisées pour désigner les mêmes éléments.

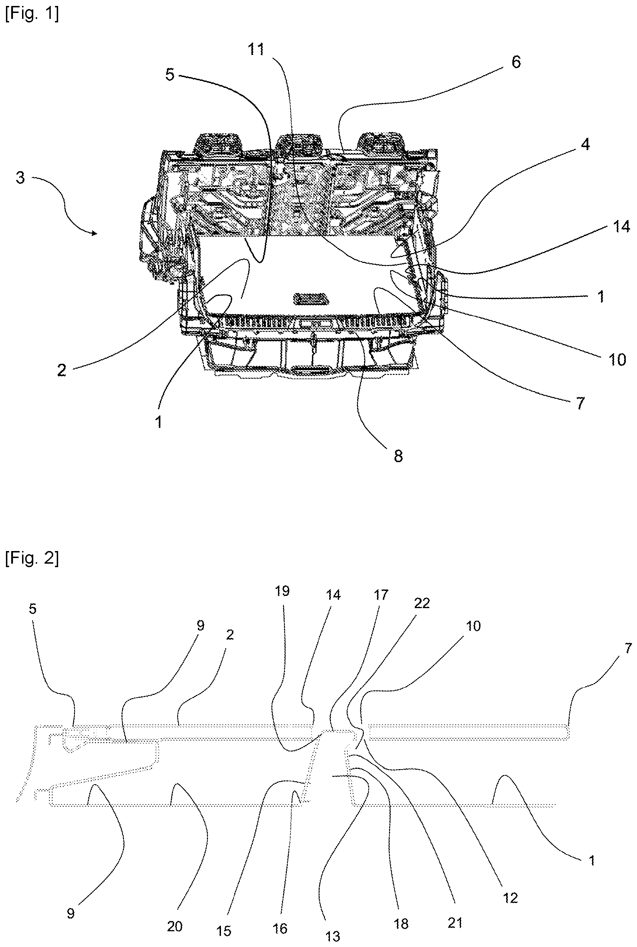

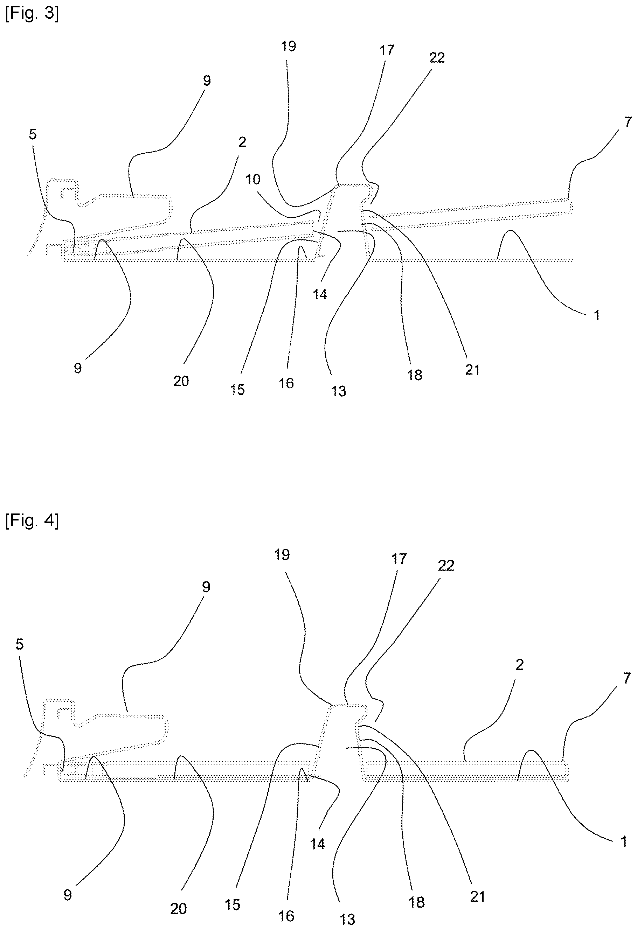

Un support 1 latéral selon l'invention, illustré sur les figures, permet de supporter un panneau 2 de plancher, illustré sur les figures, d'un coffre 3 automobile, illustré sur la figure 1. Le support 1 latéral est conçu pour s'étendre le long d'une garniture 4 latérale du coffre 3, illustrée sur la figure 1. Le coffre 3 selon l'invention, comporte le panneau 2 de plancher ainsi que deux supports 1 latéraux fixés chacun sur une garniture 4 latérale gauche ou droite. Les supports 1 latéraux sont l'image l'un de l'autre dans un miroir selon qu'il est destiné à être installé à gauche ou à droite du coffre 3. Comme illustré sur les figures, le support 1 latéral s'étend depuis une extrémité avant 5, conçue pour être disposée dans le coffre 3 à proximité de sièges passagers 6, et une extrémité arrière 7, conçue pour être disposée dans le coffre 3 à proximité d'un panneau arrière 8 du coffre 3. Le support 1 latéral est conçu pour permettre de supporter, lorsque le support 1 est installé le long de la garniture 4, le panneau 2 de plancher dans au moins deux positions distinctes, illustrés sur les figures 2 et 4, dont une position haute, illustrée sur la figure 2.

L'extrémité avant 5 comporte une pluralité de surfaces d'appui 9 conçues pour permettre de supporter le panneau 2 de plancher, chaque surface d'appui 9 correspondant à une position distincte du panneau 2 de plancher dans le coffre 3. Le support 1 latéral est, par exemple, réalisé par moulage de matière plastique.

Pour coopérer avec le support 1 latéral, le panneau 2 de plancher comporte une encoche 10 ménagée sur un bord latéral 11 du panneau 2 de plancher. Comme illustré sur la figure 1, le panneau 2 de plancher comporte ainsi deux encoches 10 rectangulaires ménagées chacune aux environs du milieu de chaque bord latéral 11 et délimitant chacune un espace 12.

Le support 1 latéral comporte des moyens de guidage 13 faisant saillie du support 1 et conçus pour guider le déplacement du panneau 2 de plancher entre deux positions par glissement d'un pourtour 14 de l'encoche 10 sur un plan de glissement 15 des moyens de guidage 13. Ainsi, dans le coffre 3 selon l'invention, pour permettre le glissement du panneau 2 entre deux positions sur les moyens de guidage 13, chaque encoche 10 est dimensionnée et positionnée pour coopérer par glissement de chaque pourtour 14 de chaque encoche 10 avec un plan de glissement 15, comme illustré sur la figure 3.

Les moyens de guidage 13 s'étendent, d'une part, depuis une base 16 jusqu'à un rebord supérieur 17, illustrés sur les figures, conformé pour prolonger le panneau 2 de plancher, lorsque ce dernier est supporté dans la position haute. Les moyens de guidage 13 s'étendent, d'autre part, entre le plan de glissement 15 et un bord opposé 18, le bord opposé 18 présentant une forme concave entre la base 16 et le rebord supérieur 17. Comme illustré sur les figures, le plan de glissement 15 est ménagé entre l'extrémité avant 5 et le bord opposé 18. Avantageusement, le plan de glissement 15 prolonge le rebord supérieur 17 pour former une surface de glissement 19 continue.

Enfin, le support 1 latéral comporte un plan d'appui 20 disposé dans le prolongement de la base 16 et permettant au panneau 2 de plancher de prendre appui lors de ses changements de position.

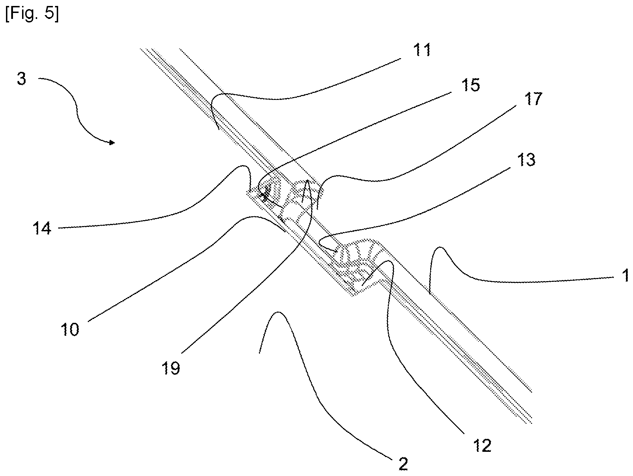

Comme illustré sur la figure 5, le rebord supérieur 17 occupe au moins 50% de l'espace 12 délimité par le pourtour 14 d'une encoche 10, de préférence au moins 80%. Ainsi, lorsque le panneau 2 de plancher est positionné en position haute, le rebord supérieur 17 comble l'espace 12 laissé entre le pourtour 14 de l'encoche 10 de sorte que l'utilisateur perçoit une surface de plancher continue.

Lorsque le panneau 2 de plancher est positionné en position basse, illustrée sur la figure 4, le passage de cette position vers la position haute est effectué en glissant le panneau 2 de plancher sur un plan d'appui 20, comme expliqué précédemment, tandis que le pourtour 14 de l'encoche 10 prend appui sur le plan de glissement 15, la forme concave du bord opposé 18 permettant le passage de l'encoche 10 lorsque le panneau 2 est incliné par rapport au rebord supérieur 17. La dimension de l'encoche 10 doit être choisie pour permettre un jeu suffisant pour permettre au pourtour 14 de l'encoche 10 de passer le rebord supérieur 17 lorsque le panneau 2 de plancher est incliné. Inversement, lorsque le panneau 2 de plancher est déplacé de la position haute vers la position basse, le pourtour 14 de l'encoche 10 risque de venir en butée sur le bord opposé 18. A cet effet la forme concave du bord opposé 18 permet d'éviter le blocage du panneau 2 lors des transitions entre deux positions tout en conservant des dimensions de l'encoche 10 suffisante pour que le rebord supérieur 17 occupe suffisamment l'espace 12.

Dans l'exemple illustré sur les figures, le bord opposé 18 présente trois faces 21 inclinées formant un évidement 22 sur le bord opposé 18, de sorte à rendre le bord opposé 18 concave et à réduire la largeur minimale des moyens de guidage 13 mesurée entre le plan de glissement 15 et le bord opposé 18.

Ainsi, le support 1 latéral selon l'invention, grâce aux moyens de guidage 13, permet de faciliter le déplacement du panneau 2 de plancher entre la position haute et une autre position. Le rebord supérieur 17 prolonge le panneau 2 de plancher et offre un ajustement du panneau 2 de plancher avec chaque support 1 latéral optimisé. La forme concave du bord opposé 18 permet le déplacement autour de la position haute du panneau 2 de plancher.

L'invention ne se limite pas au mode de réalisation du support latéral décrit ci-avant, seulement à titre d'exemple, mais d'autres modes de réalisation peuvent être conçus par l'homme de métier sans sortir du cadre et de la portée de la présente invention.

## Revendications

1. Support (1) latéral d'un panneau (2) de plancher d'un coffre (3) automobile conçu pour s'étendre le long d'une garniture (4) latérale du coffre (3), le support (1) latéral étant conçu pour permettre de supporter, lorsque le support (1) est installé le long de la garniture (4), le panneau (2) de plancher dans au moins deux positions distinctes dont une position haute, le panneau (2) de plancher étant du type comportant une encoche (10) ménagée sur un bord latéral (11) du panneau (2), le support (1) comportant des moyens de guidage (13) faisant saillie du support (1) et conçus pour guider le déplacement du panneau (2) de plancher entre deux positions par glissement d'un pourtour (14) de l'encoche (10) sur un plan de glissement (15) des moyens de guidage (13) **caractérisé en ce que** les moyens de guidage (13) s'étendent, d'une part, depuis une base (16) jusqu'à un rebord supérieur (17) conformé pour prolonger le panneau (2) de plancher, lorsque ce dernier est supporté dans la position haute, et s'étendent, d'autre part, entre le plan de glissement (15) et un bord opposé (18), le bord opposé (18) présentant une forme concave entre la base (16) et le rebord supérieur (17).

2. Support (1) latéral selon la revendication 1, **caractérisé en ce que** le support (1) s'étend depuis une extrémité avant (5), conçue pour être disposée dans le coffre (3) à proximité de sièges passagers (6), et une extrémité arrière (7), conçue pour être disposée dans le coffre (3) à proximité d'un panneau arrière (8) du coffre (3), le plan de glissement (15) étant ménagé entre l'extrémité avant (5) et le bord opposé (18).

3. Support (1) latéral selon la revendication 2, **caractérisé en ce que** l'extrémité avant (5) comporte une pluralité de surfaces d'appui (9) conçues pour permettre de supporter le panneau (2) de plancher, chaque surface d'appui (9) correspondant à une position distincte du panneau (2) de plancher dans le coffre (3).

4. Support (1) latéral selon l'une des revendications 1 à 3, **caractérisé en ce que** le plan de glissement (15) prolonge le rebord supérieur (17) pour former une surface de glissement (19) continue.

5. Coffre (3) de véhicule automobile comprenant au moins un support (1) latéral selon l'une des revendications 1 à 4, chacun monté sur une garniture (4) latérale du coffre (3) et un panneau (2) de plancher présentant au moins une encoche (10) ménagée sur un bord latéral (11) du panneau (2), chaque encoche (10) étant dimensionnée et positionnée pour coopérer par glissement d'un pourtour (14) de l'encoche (10) avec un plan de glissement (15) des moyens de guidage (13), lorsque le panneau (2) est déplacé entre deux positions, le rebord supérieur (17) prolongeant le panneau (2) de plancher dans l'espace (12) délimité par le pourtour (14) de l'encoche (10) lorsque le panneau (2) est supporté dans la position haute.

6. Coffre (3) selon la revendication 5, **caractérisée en ce que** le rebord supérieur (17) occupe au moins 50% de l'espace (12) délimité par le pourtour (14) d'une encoche (10), de préférence au moins 80%.

7. Véhicule comportant au moins un coffre (3) selon la revendication 5 ou 6.

## Patentansprüche

1. Seitenstütze (1) einer Bodenplatte (2) eines Kofferraums (3), die sich entlang einer seitlichen Auskleidung (4) des Kofferraums (3) erstreckt, wobei die Seitenstütze (1) so ausgelegt ist, dass sie, wenn die Stütze (1) entlang der Auskleidung (4) installiert ist, die Bodenplatte (2) in mindestens zwei verschiedenen Positionen, einschließlich einer hohen Position, tragen kann, wobei die Bodenplatte (2) von der Art ist, die eine Kerbe (10) an einem Seitenrand (11) der Platte (2) aufweist, wobei die Stütze (1) Führungsmittel aufweist (13) aus dem Träger (1) herausragen und zur Führung der Bewegung der Bodenplatte (2) zwischen zwei Positionen durch Verschieben eines Umfangs (14) der Kerbe (10) auf einer Gleitebene (15) der Führungsmittel (13) ausgebildet sind, wobei sich die Führungsmittel (13) einerseits von einer Basis (16) zu einem oberen Rand (17) erstrecken, der ausgebildet ist, um die Bodenplatte (2) zu verlängern, wenn diese in der oberen Position abgestützt ist, und sich andererseits zwischen der Ebene erstrecken Gleitstück (15) und eine Gegenkante (18), wobei die Gegenkante (18) zwischen der Basis (16) und der Oberkante (17) eine konkave Form aufweist.

2. Seitenständer (1) nach Anspruch 1, **dadurch gekennzeichnet, dass** sich der Träger (1) von einem vorderen Ende (5), das zur Anordnung in dem Kofferraum (3) in der Nähe von Fahrgastsitzen (6) ausgebildet ist, und einem hinteren Ende (7), das zur Anordnung in dem Kofferraum (3) in der Nähe einer hinteren Platte (8) des Kofferraums (3) ausgebildet ist, erstreckt, wobei die Gleitebene (15) zwischen dem vorderen Ende (5) und der gegenüberliegenden Kante (18) ausgebildet ist.

3. Seitenstütze (1) nach Anspruch 2, **dadurch gekennzeichnet, dass** das vordere Ende (5) eine Vielzahl von Auflageflächen (9) aufweist, die so ausgebildet sind, dass sie die Bodenplatte (2) stützen können, wobei jede Auflagefläche (9) einer gesonderten Position der Bodenplatte (2) im Kofferraum (3) entspricht.

4. Seitenhalter (1) nach einem der Ansprüche 1 bis 3, **dadurch gekennzeichnet, dass** die Gleitebene (15) den oberen Rand (17) verlängert, um eine durchgehende Gleitfläche (19) zu bilden.

5. Kofferraum (3) für ein Kraftfahrzeug, umfassend mindestens eine seitliche Halterung (1) nach einem der Ansprüche 1 bis 4, die jeweils an einem seitlichen Belag (4) des Kofferraums (3) montiert ist, und eine Bodenplatte (2), die mindestens eine Kerbe (10) aufweist, die an einem Seitenrand (11) der Platte (2) ausgebildet ist, wobei jede Kerbe (10) so bemessen und positioniert ist, dass sie gleitend mit einem Umfang (14) der Kerbe (10) mit einer Gleitebene (15) der Führungseinrichtungen (13) zusammenwirkt, wenn die Platte (2) zwischen zwei Stellungen bewegt wird, wobei die Oberkante (17) die Bodenplatte (2) in den durch den Umfang (14) der Kerbe (10) begrenzten Raum (12) verlängert, wenn die Bodenplatte (2) in der oberen Stellung abgestützt ist.

6. Kofferraum (3) nach Anspruch 5, **dadurch gekennzeichnet, dass** der obere Rand (17) mindestens 50% des vom Umfang (14) einer Kerbe (10) begrenzten Raums (12), vorzugsweise mindestens 80%, einnimmt.

7. Fahrzeug mit mindestens einem Kofferraum (3) nach Anspruch 5 oder 6.

## Claims

1. Lateral support (1) for a floor sign (2) of a motor vehicle boot (3) designed to extend along a lateral lining (4) of the boot (3), the lateral support (1) being designed to support, when the support (1) is installed along the lining (4), the floor sign (2) in at least two distinct positions, including a high position, the floor sign (2) being of the type comprising a notch (10) formed on a lateral edge (11) of the sign (2), the support (1) comprising guide means (13) projecting from the support (1) and designed to guide the movement of the floor sign (2) between two positions by sliding of a periphery (14) of the notch (10) on a sliding drawing (15) guide means (13), the guide means (13) extending, on the one hand, from a base (16) to an upper edge (17) shaped to prolong the floor sign (2), when the latter is supported in the high position, and extending, on the other hand, between the sliding drawing (15) and an opposite edge (18), the opposite edge (18) having a concave shape between the base (16) and the upper edge (17).

2. Lateral support (1) according to claim 1, wherein the support (1) extends from a front end (5), designed to be arranged in the trunk (3) with a local of passenger seats (6), and a rear end (7), designed to be arranged in the trunk (3) with a local of a rear panel (8) of the trunk (3), the sliding drawing (15) being arranged between the front end (5) and the opposite edge (18).

3. Lateral support (1) according to claim 2, wherein the front end (5) comprises a plurality of bearing surfaces (9) designed to support the floor sign (2), each bearing surface (9) corresponding to a distinct position of the floor sign (2) in the trunk (3).

4. Lateral support (1) according to one of claims 1 to 3, wherein the sliding drawing (15) extends the upper rim (17) to form a continuous sliding surface (19).

5. Motor vehicle trunk (3) comprising at least one lateral support (1) according to one of claims 1 to 4, each mounted on a lateral lining (4) of the trunk (3) and a floor sign (2) having at least one notch (10) formed on a lateral edge (11) of the sign (2), each notch (10) being dimensioned and positioned to cooperate by sliding a periphery (14) of the notch (10) with a sliding drawing (15) of the guide means (13), when the sign (2) is moved between two positions, the upper edge (17) extending the floor sign (2) into the space (12) defined by the periphery (14) of the notch (10) when the sign (10) is supported in the high position.

6. Box (3) according to claim 5, **characterised in that** the upper rim (17) occupies at least 50% of the space (12) delimited by the periphery (14) of a notch (10), preferably at least 80%.

7. Vehicle comprising at least one trunk (3) according to Claim 5 or 6.
